# FASCICULE DE BREVET EUROPEEN

(11) **EP 3 844 845 B1**
(45) Date de publication et mention de la délivrance du brevet: **01.07.2026**
(21) Numéro de dépôt: 19756376.0
(22) Date de dépôt: 23.08.2019
(51) Int. Cl.: H01Q 3/46, H01Q 13/18, H01Q 15/00, H01Q 1/42, H01Q 1/32

(54) **PIÈCE DE CARROSSERIE DE VÉHICULE COMPRENANT AU MOINS UNE ANTENNE DIRECTIVE**
FAHRZEUGKAROSSERIETEIL MIT MINDESTENS EINER RICHTANTENNE
VEHICLE BODY PART COMPRISING AT LEAST ONE DIRECTIONAL ANTENNA

(30) Priorité: 27.08.2018 FR 1857669; 22.03.2019 FR 1903027
(43) Date de publication de la demande: 07.07.2021
(73) Titulaire: OPmobility SE, 69007 Lyon (FR); Centre National de la Recherche Scientifique, 75794 Paris Cedex 16 (FR); Greenerwave SAS, 06560 Valbonne Sophia Antipolis (FR); Ecole Supérieure de Physique et de Chimie Industrielles de la Ville de Paris, 75005 Paris (FR)
(72) Inventeur: STEPHAN, Ronan, 92593 Levallois-Perret (FR); BANCELIN, Mathieu, 92593 Levallois-Perret (FR); FINK, Mathias, 92190 Meudon (FR); LEROSEY, Geoffroy, 75010 PARIS (FR); ETAIX, Nicolas, 94800 Villejuif (FR)
(74) Mandataire: LLR
(86) Numéro de dépôt international: PCT/EP2019/072639
(87) Numéro de publication internationale: WO 2020/043633

(56) Documents cités:
- FR-A1- 3 054 940
- US-A1- 2010 033 389
- US-A1- 2012 200 465
- US-A1- 2013 201 068
- US-A1- 2015 130 673
- US-A1- 2017 133 762
- US-B2- 6 906 674

## Description

La présente invention concerne le domaine des véhicules terrestre à moteur, par exemple des véhicules automobiles, équipés d'une antenne directive pour émettre et/ou recevoir une onde électromagnétique dans une direction souhaitée. Une antenne est isotrope si elle émet et/ou reçoit une onde électromagnétique de la même façon dans toutes les directions. Une antenne a une directivité si elle émet et/ou reçoit une onde électromagnétique dans une direction précise.

On connaît des véhicules équipés de telles antennes afin de communiquer avec des systèmes distants, pour envoyer ou recevoir des informations. Ces antennes sont généralement positionnées sur le toit du véhicule, mais aussi partiellement sur d'autres pièces de carrosserie telles que le hayon et le capot.

On connaît également des véhicules équipés de dispositifs du type radar, généralement positionnés sur les pare-chocs avant et arrière du véhicule. En effet, pour des raisons de sécurité notamment, il est connu d'équiper des véhicules automobiles de radars, par exemple de type ACC, selon l'expression anglo-saxonne « Adaptative Cruise Control ». Un tel radar sert en particulier à réguler la vitesse des véhicules en fonction du trafic et/ou d'obstacles sur la route. Le radar détecte la vitesse et la distance de l'objet précédant le véhicule porteur, de façon à maintenir notamment une distance de sécurité entre les véhicules.

De façon générale, un domaine important des applications de radars à l'industrie automobile est celui de la carrosserie des véhicules dans laquelle on intègre de plus en plus de modules radar pour permettre la vision périphérique totale autour du véhicule, par exemple pour des équipements tels que des systèmes d'assistance aux manœuvres de parking, des systèmes d'assistance de recul ou des installations de protection des piétons ou autres systèmes de ce type.

Afin de mieux caractériser l'environnement périphérique du véhicule, les constructeurs automobiles recherchent des dispositifs permettant d'améliorer, d'une part, la taille du volume d'étude autour du véhicule, scanné par les ondes électromagnétiques, et d'autre part, la résolution du traitement des informations issues de ces dispositifs. Ceci, afin que le véhicule interagisse au mieux avec son environnement, pour notamment, éviter des accidents, faciliter les manœuvres et rouler de façon autonome.

Ainsi, les véhicules s'équipent de plus en plus de dispositifs tels que des LIDAR et des caméras.

Pour obtenir des informations supplémentaires aux informations relatives à la position et à la distance d'un obstacle, on recherche des dispositifs ayant une résolution spatiale accrue. La résolution spatiale, également appelée pouvoir de résolution, ou pouvoir de séparation, exprime la capacité d'un dispositif de mesure ou d'observation à distinguer les détails. Il peut être caractérisé par la distance minimale qui doit séparer deux points contigus pour qu'ils soient correctement discernés.

Cette distance de résolution est fonction du rapport entre la longueur d'onde de l'onde utilisée pour l'observation, et la taille de l'ouverture du dispositif d'observation. Ainsi, pour augmenter la résolution spatiale, c'est-à-dire diminuer la distance de résolution, il est nécessaire de diminuer la longueur d'onde (augmenter la fréquence de l'onde) et/ou nécessaire d'augmenter l'ouverture du dispositif d'observation.

C'est la raison pour laquelle on cherche aujourd'hui à augmenter la fréquence des radars, et à multiplier le nombre de radars distribués sur une surface donnée. La place disponible sur un véhicule étant limitée, on cherche donc également à miniaturiser les radars.

Cependant, l'augmentation du nombre de radars distribués sur une surface donnée, engendre une augmentation du coût.

De plus, l'augmentation du nombre de radars nécessité d'alimenter de nombreuses pistes radiofréquences, ce qui est complexe, coûte cher, et consomme beaucoup d'énergie.

Par ailleurs, même si les radars sont de plus en plus petits, l'augmentation du nombre de radars distribués sur une surface donnée, engendre généralement une augmentation de taille de la surface, d'autant plus qu'il est nécessaire de conserver une distance minimale entre chaque radar.

Par ailleurs, un problème rencontré pour un radar porté par une pièce de carrosserie concerne le positionnement du radar. En effet, il est important de pouvoir assurer l'intégrité d'un radar, afin qu'il remplisse sa fonction correctement, même en cas de déformation de la pièce de carrosserie le portant (choc, dilatation thermique, ...). Il est donc nécessaire d'assurer un bon positionnement du radar (direction d'émission/réception maintenue) pendant toute la durée d'utilisation de la fonction radar.

Les documents US 2017/133762 A1 et US 2015/130673 A1 décrivent des antennes comprenant un élément rayonnant et une structure à bande interdite magnétique (BIE) orientant un faisceau reçu par l'élément rayonnant selon un angle défini à la conception de la structure à bande interdite magnétique. Le document US 2012/200465 A1 décrit quant à lui une antenne radar comprenant une ou plusieurs surfaces réfléchissantes. Un réflecteur peut être mobile en rotation. Le document US2010/033389 A1 divulgue un boîtier comprenant une antenne et un EBG adaptable avec un contrôleur.

L'invention a pour but de remédier aux inconvénients précités, en fournissant une pièce de carrosserie de véhicule terrestre à moteur comprenant au moins une antenne directive, apte à émettre et/ou recevoir une onde électromagnétique dans une direction donnée depuis une grande surface (en relation avec la taille de la pièce de carrosserie elle-même).

A cet effet, l'invention a pour objet une pièce de carrosserie de véhicule terrestre à moteur selon la revendication 1.

Un tel système permet d'obtenir un radar haute résolution, permettant de réaliser des images hautes résolutions en 4D. On obtient donc un radar imageur qui est capable de reproduire à lui seul un environnement selon les coordonnées (x, y, z) d'un seul tenant, et de mesurer la vitesse, par opposition à un unique radar actuel qui ne mesure qu'une distance (selon la coordonnée x par exemple) et la vitesse.

De plus, on peut ainsi piloter une surface adaptable (dite méta-surface) avec une électronique conventionnelle (signaux électriques) qui va « mettre en forme » l'onde émise par l'émetteur-récepteur et le transformer en radar imageur.

Ce système a aussi un encombrement très limité, de part une épaisseur réduite entre les parois de la pièce de carrosserie, et une consommation énergétique réduite. En effet, le système travaille uniquement sur les réflexions, en émettant depuis un émetteur-récepteur vers de grandes surfaces, et on n'a pas à alimenter des pistes radiofréquences. Il faut uniquement faire passer du contrôle électronique pour modifier les surfaces adaptables.

Les ondes sont émises dans un certain volume, ce qui est donc bien plus simple que d'alimenter une grande antenne. Il n'y a pas de perte d'énergie et peu d'atténuation, donc on peut aller vers une grande surface de radar et recouvrir une grande surface avec un coût qui n'est pas élevé. De plus, cette surface est au plus proche de l'extérieur du véhicule, puisqu'il s'agit de la pièce de carrosserie elle-même, avec un minimum de matière à traverser pour les ondes.

Selon l'invention, la surface adaptable comprend une pluralité d'éléments réglables pour modifier une impédance de ladite surface adaptable et pour modifier la manière dont l'onde électromagnétique est réfléchie par ladite surface adaptable, et la surface adaptable est reliée à un contrôleur apte à contrôler les éléments réglables de la surface adaptable

La pièce de carrosserie peut en outre comporter l'une ou plusieurs des caractéristiques suivantes, prises seules ou en combinaison :
- la cavité comporte au moins une ouverture, l'onde électromagnétique étant émise vers l'extérieur de la cavité électromagnétique ou étant reçue de l'extérieur de la cavité électromagnétique, à travers ladite ouverture ;
- la cavité est remplie d'air, d'une matière plastique différente de la matière plastique formant le reste de la paroi, ou d'une matière plastique identique à la matière plastique formant le reste de la paroi ;
- les éléments réglables de la surface adaptable comportent des composants électroniques tels que des transistors, des diodes, des diodes varicap et/ou des composants piézoélectriques ;
- le contrôleur est apte à reconfigurer les éléments réglables à la suite d'une déformation de la pièce de carrosserie ;
- le contrôleur est apte à contrôler les éléments réglables de façon à ce que l'onde émise par l'émetteur-récepteur balaie un espace tridimensionnel localisé devant la face extérieure ;
- l'émetteur-récepteur est apte à émettre et/ou recevoir des ondes électromagnétiques à différentes fréquences, notamment 77 GHz ;
- le boitier comprend au moins un élément réfléchissant apte à réfléchir une onde électromagnétique à l'intérieur de la cavité ;
- l'élément réfléchissant et la surface adaptable délimitent la cavité électromagnétique ;
- l'élément réfléchissant est apte à réfléchir l'onde émise par l'émetteur-récepteur sur sensiblement toute la surface de la surface adaptable ;
- l'élément réfléchissant est un premier film fixé sur au moins une partie de la face extérieure de la pièce ;
- le premier film est un film métallique ;
- la surface adaptable constitue un second film fixé sur au moins une partie de la face intérieure de la pièce ;
- la paroi forme une cavité électromagnétique pour les ondes électromagnétiques dans laquelle sont intégrés l'émetteur-récepteur et la surface adaptable, et le film comporte au moins une ouverture, l'onde électromagnétique étant émise vers l'extérieur de la cavité ou étant reçue de l'extérieur de la cavité, à travers ladite ouverture ;
- la taille de l'ouverture est réglable ;
- la paroi a une longueur minimale de 80cm, une largeur minimale de 30cm, et une épaisseur inférieure à 5mm, préférentiellement entre 2mm et 4mm ;
- la pièce de carrosserie constitue un pare-chocs.

L'invention a également pour objet un véhicule terrestre à moteur comprenant une pièce de carrosserie selon l'invention.

Le contrôleur est avantageusement apte à contrôler les éléments réglables de façon à ce que l'onde émise par l'émetteur-récepteur balaie un espace tridimensionnel en périphérie du véhicule terrestre à moteur.

### Brève description des figures

L'invention sera mieux comprise à la lecture de la description qui va suivre donnée uniquement à titre d'exemple et faite en se référant aux dessins annexés dans lesquels :
[Fig. 1] est une illustration d'un exemple de pièce de carrosserie selon l'invention, un pare-chocs avant ;
[Fig. 2] est une coupe transversale A-A' du pare-chocs de la figure 1 ;
[Fig. 3] est une illustration de la surface adaptable de la figure 2 ;
[Fig. 4] est un autre exemple de pièce de carrosserie, selon lequel la pièce de carrosserie comporte deux cavités électromagnétiques.

### Description détaillée

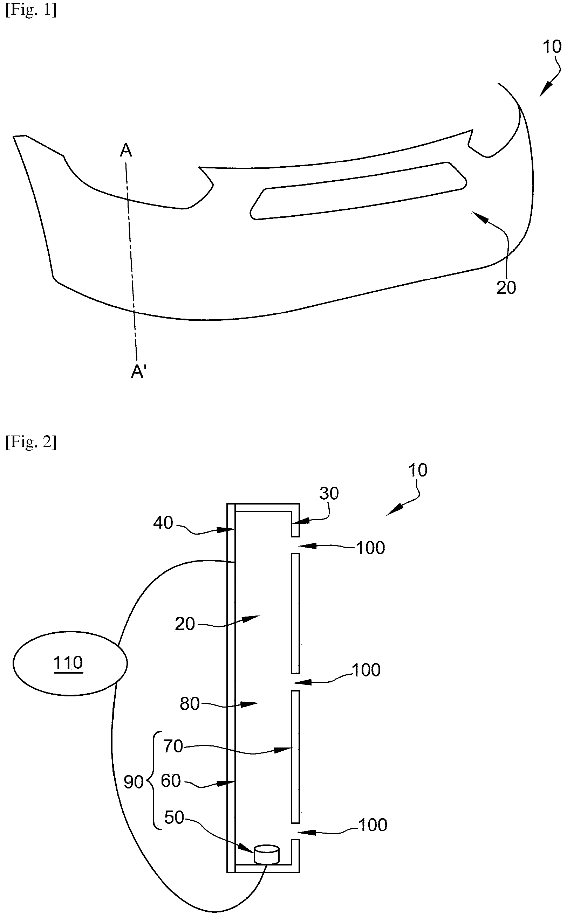

On se réfère maintenant à la figure 1, qui illustre un exemple de pièce de carrosserie 10 de véhicule terrestre à moteur 200. Selon cet exemple, la pièce de carrosserie 10 est un pare-chocs avant. Mais l'invention concerne toute pièce de carrosserie, telle qu'un pare-chocs arrière, un hayon, une portière, un toit, un capot de véhicule, une porte ou encore un bas de caisse. De façon avantageuse, l'invention concerne une pièce de carrosserie de grande dimension. On entend par grande dimension, une pièce ayant une superficie supérieure à environ 300cm².

La pièce de carrosserie 10 comprend au moins une paroi 20 munie d'une face extérieure 30 destinée à être tournée vers l'extérieure du véhicule 200 et d'une face intérieure 40 opposée à la face extérieure.

Comme l'illustre plus en détail la figure 2, qui représente une section transversale A-A' de la pièce de carrosserie de la figure 1, et représente ainsi une section transversale du pare-chocs, la paroi 20 comprend au moins un boitier 90 formant une cavité 80 pour ondes électromagnétiques, le boitier 90 comprenant :
- au moins un émetteur-récepteur 50 pour émettre et/ou recevoir une onde électromagnétique dans ledit boitier 90 ;
- au moins une surface adaptable 60 apte à réfléchir de façon contrôlée, c'est-à-dire dans une direction donnée, l'onde électromagnétique émise par l'émetteur-récepteur 50, et réciproquement apte à réfléchir l'onde électromagnétique provenant de l'extérieur du boitier 90 vers l'émetteur-récepteur 50.

La cavité électromagnétique 80 comporte au moins une ouverture 100, l'onde électromagnétique étant émise vers, ou reçue depuis, l'extérieur de la cavité électromagnétique 80 à travers ladite ouverture 100. Ainsi, l'ouverture 100 est une ouverture au sens électromagnétique qui laisse au moins partiellement fuir les ondes électromagnétiques vers l'extérieur de la paroi 20. Selon un mode de réalisation, la taille de l'ouverture 100 est réglable, par exemple en changeant électroniquement la transmittance d'une portion de l'ouverture 100.

Grâce à ces dispositions, l'onde électromagnétique générée par l'émetteur-récepteur 50 est réfléchie à l'intérieur de la cavité électromagnétique 80 et par la surface adaptable 60 plusieurs fois avant d'être émise via l'ouverture 100 (ouverture directe ou semi réfléchissante) vers l'extérieur de la paroi 20. Cette onde électromagnétique est alors plus facilement contrôlable avant son émission. Notamment, il est possible de créer simultanément et avec tout type d'émetteur-récepteur, une antenne directive avec un lobe principal de grande amplitude et une antenne avec un lobe orientable (en élévation et en azimut) dans toute direction. De plus, on évite des pertes de rayonnement électromagnétique en dehors de la surface adaptable 60. L'onde émise par l'émetteur-récepteur 50 est presque totalement réfléchie par la surface adaptable 60, et donc presque toute l'énergie peut être contrôlée pour être concentrée en un faisceau unique, i.e. un lobe principal. L'antenne est donc plus efficace. En outre, tous les chemins entre l'émetteur-récepteur 50 et la surface adaptable 60 sont contenus dans le volume de la cavité électromagnétique 80, i.e. à l'intérieur de la paroi 20, et le rendement de l'antenne va être meilleur, renforçant ainsi l'efficacité de l'antenne.

Selon un exemple de réalisation, la pièce 10 comporte en outre un écran 55 positionné dans la cavité électromagnétique 80 entre l'émetteur-récepteur 50 et l'ouverture 100 pour limiter un rayonnement direct d'onde électromagnétique de l'émetteur-récepteur 50 vers l'extérieur de la paroi 20 et/ou pour réfléchir les ondes en direction de la surface adaptable 60.

Un tel boitier 90 forme un système de détection radar adapté pour imager des objets dans un espace situé à la périphérie du véhicule 200. La pièce de carrosserie 10 peut ainsi comporter plusieurs antennes.

Un tel boitier 90 peut également former un système de communication radio adapté pour communiquer toutes types de données, telles que des données audio et/ou vidéo, ou des messages.

Grâce à cette intégration d'un émetteur-récepteur 50 et d'une surface adaptable 60 dans une cavité électromagnétique, l'antenne est capable de transformer un rayonnement électromagnétique quelconque de l'émetteur-récepteur simultanément en un rayonnement pilotable en orientation dans un angle solide dans toutes les directions de l'espace. En outre, cette antenne est compacte en épaisseur et très efficace.

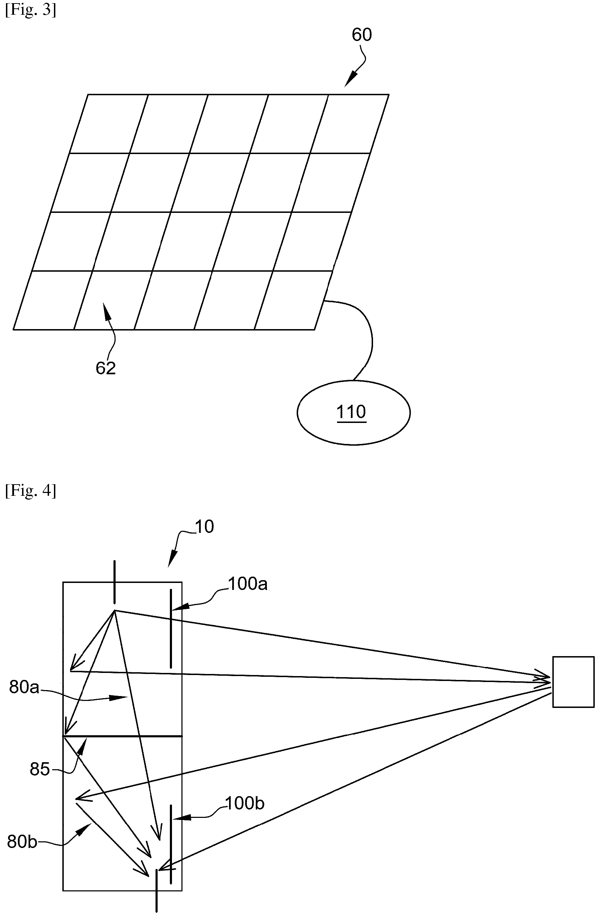

Selon un autre mode de réalisation, illustré sur la figure 4, la paroi 20 comporte deux cavités 80a et 80b : une cavité 80a est dédiée à la transmission de l'onde électromagnétique, et une autre cavité 80b est dédiée à la réception d'une onde électromagnétique. Pour ce faire, la cavité électromagnétique 80 est séparée par une paroi réfléchissante 85 apte à réfléchir les ondes électromagnétiques. Une telle paroi réfléchissante 85 peut par exemple être surmoulée dans la paroi 20. Chaque cavité 80a, 80b comporte alors au moins une ouverture 100a, 100b.

### La paroi 20

La paroi 20 constitue le corps principal du pare-chocs 10. La paroi 20 comprend au moins un boitier 90 formant une cavité 80 pour ondes électromagnétiques.

Le boitier 90 peut être tout ou partie de la paroi 20.

La cavité 80 peut être remplie d'air, d'une matière plastique différente de la matière plastique formant le reste de la paroi 20, ou encore, être remplie de la même matière plastique que celle de la paroi 20 (dans ce cas le boitier 90 constitue un volume inclus dans la paroi 20).

Lorsque la cavité 80 est remplie d'une matière, cette matière est transparente ou semi-transparente aux ondes électromagnétiques. La cavité 80 peut ainsi être est réalisée dans une matière plastique qui peut être choisie par exemple parmi les matières plastiques suivantes : PP, PP-EPDM, ASA, ABS-PC, PC-PET, PMMA-ASA et PC. De préférence, la matière est choisie parmi des polymères à chaines longues pour minimiser la dissipation d'énergie.

Le boitier 90 a de façon avantageuse une épaisseur supérieure à la moitié de la longueur d'onde de l'onde électromagnétique.

Selon un exemple de réalisation, le boitier 90 a une longueur minimale de 80cm, une largeur minimale de 30cm, et une épaisseur inférieure à 5mm, préférentiellement entre 2mm et 4mm.

Le boitier 90 permet à l'émetteur-récepteur 50 d'utiliser au mieux la surface adaptable 60, c'est-à-dire qu'il vise à ce que toute l'énergie de l'onde électromagnétique émise ou entrant dans la cavité 80 soit réfléchie sur la surface adaptable 60. Le principe de fonctionnement d'un tel radar, ainsi que des variantes de réalisations sont décrites dans le document suivant : FR1857669.

Selon un mode de réalisation particulier, le boitier 90 comporte un élément réfléchissant 70, apte à réfléchir des ondes électromagnétiques à l'intérieur la cavité 80.

Ainsi, une onde électromagnétique générée par l'émetteur-récepteur 50 ou entrant dans le boitier 90, est réfléchie à l'intérieur de la cavité par l'élément réfléchissant et par la surface adaptable plusieurs fois avant d'être émise via l'ouverture (ouverture directe ou semi réfléchissante) vers l'extérieur du boîtier 90, ou avant d'être reçue par l'émetteur-récepteur 50. L'énergie de l'onde émise ou transmise est ainsi maximisée.

Ainsi, l'élément réfléchissant 70 et la surface adaptable 60 délimitent la cavité électromagnétique 80 pour les ondes électromagnétiques émises/reçues par l'émetteur-récepteur 50.

Selon un mode de réalisation avantageux, l'élément réfléchissant 70 est apte à réfléchir l'onde émise par l'émetteur-récepteur 50 sur sensiblement toute la surface de la surface adaptable 60.

Selon le mode de réalisation, l'élément réfléchissant 70 est un guide d'ondes électromagnétiques.

Selon un autre mode de réalisation représenté sur la figure 2, l'élément réfléchissant 70 est un premier film fixé sur au moins une partie de la face extérieure 30 de la pièce 10. Ce premier film peut avantageusement être un film métallique. Ce film peut être surmoulé dans la paroi 20 ou adhésivé sur la paroi 20.

Ce film peut également être recouvert d'un revêtement protecteur, par exemple réalisé en PP, PP-EPDM, ASA, ABS-PC, PC-PET, PMMA-ASA, PC ou en PU.

L'élément réfléchissant 70 comporte au moins une ouverture 100 de la cavité électromagnétique 80.

L'ouverture peut être constituée de plusieurs ouvertures élémentaires, ces ouvertures élémentaires étant sur la face extérieure 30 de la pièce.

L'ouverture peut également être constituée au moins partiellement d'un ou plusieurs éléments semi réfléchissants, tels :
- qu'un film métallique mince (plus mince que le film constituant l'élément réfléchissant 70) ;
- qu'un réseau de trous dans un élément métallique ;
- qu'un réseau de formes métalliques, d'un trou ou d'une forme étant distante d'un/une autre voisin/voisine d'une distance inférieure à la moitié de la longueur d'onde de l'onde électromagnétique.

Selon un mode de réalisation, l'élément semi réfléchissant comprend un ou plusieurs éléments réglables d'ouverture pour modifier la manière dont l'onde électromagnétique est réfléchie et/ou transmise par ladite ouverture, un contrôleur étant relié aux éléments réglables d'ouverture pour les contrôler à partir de paramètres d'ouverture.

### L'émetteur-récepteur 50

L'émetteur-récepteur 50 permet d'émettre et/ou de recevoir une onde électromagnétique 300 dans l'épaisseur de la paroi 20, principalement directement vers la surface adaptable 60, par orientation de l'émetteur-récepteur 50 dans la paroi 20. Cet élément 50 peut être choisi dans une liste comprenant un monopôle, un dipôle, un guide d'onde, un guide d'onde rayonnant, et une antenne planaire.

L'émetteur-récepteur 50 est apte à émettre et/ou recevoir des ondes électromagnétiques à différentes fréquences. Pour une application comme système de détection radar adapté pour localiser des objets dans un espace, l'émetteur-récepteur 50 est notamment apte à émettre et/ou recevoir des ondes électromagnétiques à 77 GHz.

L'émetteur-récepteur 50 est connecté, entre autres, à un processeur 110, ainsi qu'à un élément de puissance pour l'alimenter. Ainsi, l'émetteur-récepteur 50 peut être adapté en impédance avec l'impédance de la cavité 80, pour respecter une condition de couplage critique.

### La surface adaptable 60

La surface adaptable 60 est apte à orienter une onde électromagnétique hors de la paroi 20 dans une direction donnée. La surface adaptable 60 peut recouvrir tout ou une partie de la cavité 80.

Des variantes de surfaces adaptables connues sont par exemple décrites dans le document US 2004/263408 ou dans le document US 2016/0233971. De nombreuses techniques sont connues pour réaliser de telles surfaces adaptables, parfois appelées des surfaces à impédance adaptable, des méta-surfaces, des dispositifs de mise en forme d'onde, des réseaux de réflexion.

Selon l'invention, la surface adaptable 60 comprend une pluralité d'éléments réglables 62, répartis de façon périodique ou non, permettant de modifier l'impédance de la surface adaptable 60 et pour modifier la manière dont l'onde électromagnétique est réfléchie par la surface adaptable 60. Ces éléments réglables 62 peuvent par exemple comporter des composants électroniques tels que des transistors, des diodes, des diodes varicap (de l'anglais « *variable capacity »),* et/ou des composants piézoélectriques.

Les éléments réglables 62 de la surface adaptable peuvent être répartis de manière quelconque dans la cavité car les réflexions multiples assurent de balayer la surface interne de la cavité 80 et donc d'impacter tous les éléments réglables 62. Ces éléments 62 peuvent être regroupés en différents ensembles. Dans chaque ensemble, les éléments 62 peuvent être accordés à une même fréquence, mais d'un groupe à un autre, les éléments 62 sont accordés à une pluralité de fréquences différentes comprises dans une bande passante prédéterminée.

La surface adaptable 60 est reliée à un contrôleur 110 apte à contrôler les éléments réglables 62 à partir de paramètres, ces paramètres étant déterminés à partir de la direction souhaitée de l'onde électromagnétique, et éventuellement en fonction d'une polarisation souhaitée. Ces paramètres sont notamment la fréquence, la puissance, les tensions de contrôle aux bornes des éléments de la surface adaptable, leur agencement spatial, leur durée.

Le contrôleur 110 est avantageusement en lien avec l'émetteur-récepteur afin d'être synchronisé et afin de régler les paramètres en fonction du mode d'imagerie utilisé.

Ces paramètres peuvent être préenregistrés dans une mémoire, ou par calcul d'un modèle ou par un procédé itératif.

Notamment, on peut enregistrer en mémoire du contrôleur des valeurs de jeux de paramètres pour une pluralité de directions, par exemple un ensemble de couples de directions angulaires selon un angle du plan horizontal (azimut) et un angle du plan vertical (élévation).

Ainsi, le contrôleur 110 est apte à contrôler les éléments réglables 62 de façon à ce que l'onde émise par l'émetteur-récepteur 50 balaie un espace tridimensionnel localisé devant la face extérieure 30, ou de façon plus générale, l'émetteur-récepteur 50 balaie un espace tridimensionnel localisé en périphérie du véhicule 200.

Le contrôleur 110 est également apte à reconfigurer les éléments réglables 62 à la suite d'une déformation de la pièce de carrosserie 10, telle qu'une déformation due à un changement de température, ou suite à un choc subi par la pièce.

Selon un mode de réalisation préféré, la surface adaptable 60 constitue un second film, portant des pistes électriques et des résonateurs, fixé sur au moins une partie de la face intérieure 40 de la pièce 10. Ce second film peut être surmoulé dans la paroi 20 ou adhésivé sur la paroi 20.

Selon un autre mode de réalisation, la surface adaptable 60 comporte des pistes électriques et des résonateurs directement imprimés sur au moins une partie de la face intérieure 40 de la pièce de carrosserie 10.

Selon un autre mode de réalisation, les pistes électriques et les résonateurs de la surface adaptable 60 sont réalisés directement sur au moins une partie de la face intérieure 40 de la pièce de carrosserie 10, par activation du plastique de la pièce de carrosserie 10.

L'invention concerne également un véhicule terrestre à moteur 200 comprenant une pièce de carrosserie 10 selon l'invention.

Le contrôleur 110 est avantageusement apte à contrôler les éléments réglables 62 de façon à ce que l'onde émise par l'émetteur-récepteur 50 balaie un espace tridimensionnel en périphérie du véhicule terrestre à moteur 200.

L'invention n'est pas limitée aux modes de réalisation présentés et d'autres modes de réalisation apparaîtront clairement à l'homme du métier. On pourrait notamment envisager un émetteur-récepteur 50 qui soit linéaire, associé à un élément réfléchissant 70 sous forme de portion de cylindre.

### Liste des références

- 10 :: pièce de carrosserie
- 20 :: paroi de la pièce de carrosserie 10
- 30 :: face extérieure de la paroi 20, destinée à être tournée vers l'extérieure du véhicule 100
- 40 :: face intérieure de la paroi 20, opposée à la face extérieure 30
- 50 :: émetteur-récepteur
- 55 :: écran positionné dans la cavité électromagnétique 80
- 60 :: surface adaptable
- 62 :: éléments réglables de la surface adaptable 60
- 70 :: élément réfléchissant
- 80 :: cavité électromagnétique
- 80a et 80b :: deux cavités électromagnétiques
- 85 :: paroi réfléchissante séparant les cavités électromagnétiques 80a et 80b
- 90 :: ensemble/antenne comprenant au moins un émetteur-récepteur 50, au moins une surface adaptable 60, au moins un élément réfléchissant 70
- 100 :: ouverture de la cavité électromagnétique 80
- 100a :: ouverture de la cavité électromagnétique 80a
- 100b :: ouverture de la cavité électromagnétique 80b
- 110 :: contrôleur de la surface adaptable 60
- 200 :: véhicule terrestre à moteur

## Revendications

1. Pièce de carrosserie (10) de véhicule terrestre à moteur (200) comprenant au moins une paroi (20) réalisée en matière plastique comprenant au moins un boitier (90) formant une cavité (80) pour ondes électromagnétiques, ledit boitier (90) comprenant :
- au moins un émetteur-récepteur (50) pour émettre et/ou recevoir une onde électromagnétique dans ledit boitier (90) ;
- au moins une surface adaptable (60) configurée pour réfléchir dans une direction donnée et de façon contrôlée l'onde électromagnétique émise par l'émetteur-récepteur (50), et réciproquement configurée pour réfléchir l'onde électromagnétique provenant de l'extérieur du boitier (90) vers l'émetteur-récepteur (50); la surface adaptable (60) comprend une pluralité d'éléments réglables (62) pour modifier une impédance de ladite surface adaptable (60) et pour modifier la manière dont l'onde électromagnétique est réfléchie par ladite surface adaptable (60), la surface adaptable (60) est reliée à un contrôleur (110) apte à contrôler les éléments réglables (62) de la surface adaptable (60).

2. Pièce de carrosserie (10) selon la revendication précédente, dans laquelle la cavité (80) comporte au moins une ouverture (100), l'onde électromagnétique étant émise vers l'extérieur de la cavité électromagnétique (80) ou étant reçue de l'extérieur de la cavité électromagnétique (80), à travers ladite ouverture (100).

3. Pièce de carrosserie (10) selon la revendication précédente, dans laquelle la cavité (80) est remplie d'air, d'une matière plastique différente de la matière plastique formant le reste de la paroi (20), ou d'une matière plastique identique à la matière plastique formant le reste de la paroi (20).

4. Pièce de carrosserie (10) selon l'une des revendications précédentes, dans laquelle les éléments réglables (62) de la surface adaptable (60) comportent des composants électroniques tels que des transistors, des diodes, des diodes varicap et/ou des composants piézoélectriques.

5. Pièce de carrosserie (10) selon l'une des revendications précédentes, dans laquelle le contrôleur (110) est apte à reconfigurer les éléments réglables (62) à la suite d'une déformation de la pièce de carrosserie (10).

6. Pièce de carrosserie (10) selon l'une des revendications précédentes, dans laquelle le contrôleur (110) est apte à contrôler les éléments réglables (62) de façon à ce que l'onde émise par l'émetteur-récepteur (50) balaie un espace tridimensionnel localisé devant la face extérieure (30).

7. Pièce de carrosserie (10) selon l'une des revendications précédentes, dans laquelle l'émetteur-récepteur (50) est apte à émettre et/ou recevoir des ondes électromagnétiques à différentes fréquences, notamment 77 GHz.

8. Pièce de carrosserie (10) selon l'une des revendications précédentes, dans laquelle le boitier (90) comprend au moins un élément réfléchissant (70) apte à réfléchir une onde électromagnétique à l'intérieur de la cavité (80).

9. Pièce de carrosserie (10) selon la revendication précédente, dans laquelle l'élément réfléchissant (70) et la surface adaptable (60) délimitent la cavité électromagnétique (80).

10. Pièce de carrosserie (10) selon l'une des revendications 8 et 9, dans laquelle l'élément réfléchissant (70) est apte à réfléchir l'onde émise par l'émetteur-récepteur sur sensiblement toute la surface de la surface adaptable (60).

11. Pièce de carrosserie (10) selon l'une des revendications 8 à 10, dans laquelle l'élément réfléchissant (70) est un premier film fixé sur au moins une partie de la face extérieure (30) de la pièce (10).

12. Pièce de carrosserie (10) selon la revendication précédente, dans laquelle le premier film est un film métallique.

13. Pièce de carrosserie (10) selon l'une des revendications précédentes, dans laquelle la surface adaptable (60) constitue un second film fixé sur au moins une partie de la face intérieure (40) de la pièce (10).

14. Pièce de carrosserie (10) selon la revendication précédente, dans laquelle la paroi (20) forme une cavité électromagnétique (110) pour les ondes électromagnétiques dans laquelle sont intégrés l'émetteur-récepteur (50) et la surface adaptable (60), et le film comporte au moins une ouverture (100), l'onde électromagnétique étant émise vers l'extérieur de la cavité ou étant reçue de l'extérieur de la cavité, à travers ladite ouverture (100).

15. Pièce de carrosserie (10) selon la revendication précédente, dans laquelle la taille de l'ouverture (100) est réglable en changeant électroniquement la transmittance d'une portion de l'ouverture (100).

16. Pièce de carrosserie (10) selon l'une des revendications précédentes, dans laquelle la paroi (20) a une longueur minimale de 80cm, une largeur minimale de 30cm, et une épaisseur inférieure à 5mm, préférentiellement entre 2mm et 4mm.

17. Pièce de carrosserie (10) selon l'une des revendications précédentes, constituant un pare-chocs.

18. Véhicule terrestre à moteur (200) comprenant une pièce de carrosserie (10) selon l'une des revendications précédentes.

19. Véhicule terrestre à moteur (200) selon la revendication précédente, dans lequel le contrôleur (110) est apte à contrôler les éléments réglables (62) de façon à ce que l'onde émise par l'émetteur-récepteur (50) balaie un espace tridimensionnel en périphérie du véhicule terrestre à moteur (200).

## Patentansprüche

1. Karosserieteil (10) für motorbetriebenes Landfahrzeug (200), umfassend mindestens eine Wand (20) aus Kunststoff, die mindestens ein Gehäuse (90) umfasst, das einen Hohlraum (80) für elektromagnetische Wellen bildet, wobei das Gehäuse (90) umfasst:
- mindestens einen Transceiver (50) zum Senden und/oder Empfangen einer elektromagnetischen Welle in dem Gehäuse (90);
- mindestens eine anpassbare Fläche (60), die ausgebildet ist, um in einer bestimmten Richtung und gesteuert die von dem Transceiver (50) gesendete elektromagnetische Welle zu reflektieren, und umgekehrt ausgebildet ist, um die von außerhalb des Gehäuses (90) stammende elektromagnetische Welle zu dem Transceiver hin zu reflektieren (50);
wobei die anpassbare Fläche (60) mehrere einstellbare Elemente (62) umfasst, um eine Impedanz der anpassbaren Fläche (60) zu modifizieren und um die Art und Weise, wie die elektromagnetische Welle von der anpassbaren Fläche (60) reflektiert wird, zu modifizieren, wobei die anpassbare Fläche (60) mit einer Steuerung (110) verbunden ist, die in der Lage ist, die einstellbaren Elemente (62) der anpassbaren Fläche (60) zu steuern.

2. Karosserieteil (10) nach dem vorhergehenden Anspruch, wobei der Hohlraum (80) mindestens eine Öffnung (100) aufweist, wobei die elektromagnetische Welle durch die Öffnung (100) hindurch nach außerhalb des elektromagnetischen Hohlraums (80) gesendet wird oder von außerhalb des elektromagnetischen Hohlraums (80) empfangen wird.

3. Karosserieteil (10) nach dem vorhergehenden Anspruch, wobei der Hohlraum (80) gefüllt ist mit Luft, mit einem Kunststoff, der von dem Kunststoff, der den Rest der Wand (20) bildet, verschieden ist, oder mit einem Kunststoff, der mit dem Kunststoff, der den Rest der Wand (20) bildet, identisch ist.

4. Karosserieteil (10) nach einem der vorhergehenden Ansprüche, wobei die einstellbaren Elemente (62) der anpassbaren Fläche (60) elektronische Bauteile wie Transistoren, Dioden, Kapazitätsdioden und/oder piezoelektrische Bauteile aufweisen.

5. Karosserieteil (10) nach einem der vorhergehenden Ansprüche, wobei die Steuerung (110) in der Lage ist, die einstellbaren Elemente (62) infolge einer Verformung des Karosserieteils (10) zu rekonfigurieren.

6. Karosserieteil (10) nach einem der vorhergehenden Ansprüche, wobei die Steuerung (110) in der Lage ist, die einstellbaren Elemente (62) so zu steuern, dass die von dem Transceiver (50) gesendete Welle einen lokalisierten dreidimensionalen Raum vor der Außenfläche (30) abtastet.

7. Karosserieteil (10) nach einem der vorhergehenden Ansprüche, wobei der Transceiver (50) in der Lage ist, elektromagnetische Wellen unterschiedlicher Frequenzen, insbesondere 77 GHz, zu senden und/oder zu empfangen.

8. Karosserieteil (10) nach einem der vorhergehenden Ansprüche, wobei das Gehäuse (90) mindestens ein reflektierendes Element (70) umfasst, das in der Lage ist, eine elektromagnetische Welle im Inneren des Hohlraums (80) zu reflektieren.

9. Karosserieteil (10) nach dem vorhergehenden Anspruch, wobei das reflektierende Element (70) und die anpassbare Fläche (60) den elektromagnetischen Hohlraum (80) begrenzen.

10. Karosserieteil (10) nach einem der Ansprüche 8 und 9, wobei das reflektierende Element (70) in der Lage ist, die von dem Transceiver gesendete Welle über im Wesentlichen die gesamte Oberfläche der anpassbaren Fläche (60) zu reflektieren.

11. Karosserieteil (10) nach einem der Ansprüche 8 bis 10, wobei das reflektierende Element (70) eine erste Folie ist, die auf mindestens einem Teil der Außenfläche (30) des Teils (10) befestigt ist.

12. Karosserieteil (10) nach dem vorhergehenden Anspruch, wobei die erste Folie eine Metallfolie ist.

13. Karosserieteil (10) nach einem der vorhergehenden Ansprüche, wobei die anpassbare Fläche (60) einen zweiten Film bildet, der auf mindestens einem Teil der Innenfläche (40) des Teils (10) befestigt ist.

14. Karosserieteil (10) nach dem vorhergehenden Anspruch, wobei die Wand (20) einen elektromagnetischen Hohlraum (110) für die elektromagnetischen Wellen bildet, in den der Transceiver (50) und die anpassbare Fläche (60) integriert sind, und die Folie mindestens eine Öffnung (100) aufweist, wobei die elektromagnetische Welle durch die Öffnung (100) hindurch nach außerhalb des Hohlraums gesendet wird oder von außerhalb des Hohlraums empfangen wird.

15. Karosserieteil (10) nach dem vorhergehenden Anspruch, wobei die Größe der Öffnung (100) einstellbar ist, indem der Transmissionsgrad eines Teils der Öffnung (100) elektronisch verändert wird.

16. Karosserieteil (10) nach einem der vorhergehenden Ansprüche, wobei die Wand (20) eine Mindestlänge von 80 cm, eine Mindestbreite von 30 cm und eine Dicke kleiner als 5 mm, bevorzugt zwischen 2 mm und 4 mm hat.

17. Karosserieteil (10) nach einem der vorhergehenden Ansprüche, das einen Stoßfänger bildet.

18. Motorbetriebenes Landfahrzeug (200), umfassend ein Karosserieteil (10) nach einem der vorhergehenden Ansprüche.

19. Motorbetriebenes Landfahrzeug (200) nach dem vorhergehenden Anspruch, wobei die Steuerung (110) in der Lage ist, die einstellbaren Elemente (62) so zu steuern, dass die durch den Transceiver (50) gesendete Welle einen dreidimensionalen Raum am Umfang des motorbetriebenen Landfahrzeugs (200) abtastet.

## Claims

1. Body panel (10) for a motor vehicle (200) comprising at least one wall (20) made of plastic comprising at least one housing (90) forming a cavity (80) for electromagnetic waves, said housing (90) comprising:
- at least one transceiver (50) for emitting and/or receiving an electromagnetic wave within said housing (90);
- at least one adaptable surface (60) configured to reflect the electromagnetic wave emitted by the transceiver (50) in a given direction and in a controlled manner, and conversely configured to reflect the electromagnetic wave coming from outside the housing (90) toward the transceiver (50),
the adaptive surface (60) comprises a plurality of adjustable elements (62) for modifying an impedance of said adaptive surface (60) and for modifying the manner in which the electromagnetic wave is reflected by said adaptive surface (60), the adaptive surface (60) is connected to a controller (110) capable of controlling the adjustable elements (62) of the adaptive surface (60).

2. Body panel (10) according to the preceding claim, wherein the cavity (80) includes at least one opening (100), the electromagnetic wave being emitted outward from the electromagnetic cavity (80) or being received from outside the electromagnetic cavity (80) through said opening (100).

3. Body panel (10) according to the preceding claim, wherein the cavity (80) is filled with air, a plastic material different from the plastic material forming the remainder of the wall (20), or a plastic material identical to the plastic material forming the remainder of the wall (20).

4. Body panel (10) according to one of the preceding claims, wherein the adjustable elements (62) of the adaptable surface (60) comprise electronic components such as transistors, diodes, varicap diodes, and/or piezoelectric components.

5. Body panel (10) according to one of the preceding claims, wherein the controller (110) is capable of reconfiguring the adjustable elements (62) following deformation of the body panel (10).

6. Body panel (10) according to one of the preceding claims, wherein the controller (110) is capable of controlling the adjustable elements (62) such that the wave emitted by the transceiver (50) scans a localized three-dimensional space in front of the outer surface (30).

7. Body panel (10) according to one of the preceding claims, wherein the transceiver (50) is capable of emitting and/or receiving electromagnetic waves at different frequencies, in particular 77 GHz.

8. Body panel (10) according to one of the preceding claims, wherein the housing (90) comprises at least one reflective element (70) capable of reflecting an electromagnetic wave within the cavity (80).

9. Body panel (10) according to the preceding claim, wherein the reflective element (70) and the adaptable surface (60) define the electromagnetic cavity (80).

10. Body panel (10) according to one of claims 8 and 9, wherein the reflective element (70) is capable of reflecting the wave emitted by the transceiver over substantially the entire surface of the adaptable surface (60).

11. Body panel (10) according to any one of claims 8 to 10, wherein the reflective element (70) is a first film affixed to at least a portion of the outer face (30) of the panel (10).

12. Body panel (10) according to the preceding claim, wherein the first film is a metallic film.

13. Body panel (10) according to any one of the preceding claims, wherein the adaptable surface (60) comprises a second film affixed to at least a portion of the inner face (40) of the panel (10).

14. Body panel (10) according to the preceding claim, wherein the wall (20) forms an electromagnetic cavity (110) for electromagnetic waves, into which the transceiver (50) and the adaptable surface (60) are integrated, and the film comprises at least one opening (100), the electromagnetic wave being emitted outward from the cavity or received from outside the cavity through said opening (100).

15. Body panel (10) according to the preceding claim, wherein the size of the opening (100) is adjustable by electronically changing the transmittance of a portion of the opening (100).

16. Body panel (10) according to one of the preceding claims, wherein the wall (20) has a minimum length of 80 cm, a minimum width of 30 cm, and a thickness of less than 5 mm, preferably between 2 mm and 4 mm.

17. Body panel (10) according to one of the preceding claims, constituting a bumper.

18. Motorized land vehicle (200) comprising a body panel (10) according to one of the preceding claims.

19. Motorized land vehicle (200) according to the preceding claim, wherein the controller (110) is capable of controlling the adjustable elements (62) such that the wave emitted by the transceiver (50) scans a three-dimensional space around the motorized land vehicle (200).
